# EUROPÄISCHE PATENTSCHRIFT

(11) **EP 3 663 504 B1**
(45) Veröffentlichungstag und Bekanntmachung des Hinweises auf die Patenterteilung: **07.06.2023**
(21) Anmeldenummer: 19213672.9
(22) Anmeldetag: 04.12.2019
(51) Int. Cl.: E21B 7/04, E21B 7/20, E03F 3/06, E02D 3/10, E02B 11/00, E02F 5/18, E03F 5/02, F16L 1/036

(54) **ERDBAUVERFAHREN, ERDBAUVORRICHTUNG UND ERDBAUINSTALLATION**
EARTHWORKS METHOD, EARTHWORKS DEVICE AND EARTHWORKS INSTALLATION
PROCÉDÉ DE TERRASSEMENT, DISPOSITIF DE TERRASSEMENT ET INSTALLATION DE TERRASSEMENT

(30) Priorität: 04.12.2018 DE 102018130849
(43) Veröffentlichungstag der Anmeldung: 10.06.2020
(73) Patentinhaber: Zimmer, Werner, 66557 Illingen (DE)
(72) Erfinder: Zimmer, Werner, 66557 Illingen (DE)
(74) Vertreter: Patentanwälte Bernhardt / Wolff Partnerschaft mbB

(56) Entgegenhaltungen:
- EP-A1- 3 112 580
- DE-A1- 10 354 082
- DE-B4-102007 002 399
- KR-A- 20100 104 822
- US-A- 4 966 498

## Beschreibung

Die Erfindung betrifft ein Erdbauverfahren, bei dem mittels einer Bohreinrichtung im Erdboden ein Sackloch zur Aufnahme eines Drainagerohrs gebildet wird.

Die Erfindung betrifft ferner eine Erdbauvorrichtung.

Es ist durch Benutzung bekannt, zur Verlegung eines Drainagerohrs von einem Schacht oder einer Baugrube aus mittels eines Bohrwerkzeugs eine Bohrung im Erdboden vorzunehmen, anschließend das Bohrwerkzeug aus dem Erdboden zu nehmen und in dem durch die Bohrung geschaffenen Raum das Drainagerohr anzuordnen. Problematisch dabei ist, dass der gebohrte Raum sich oftmals nicht als stabil erweist und sich das Drainagerohr nicht in der gewünschten Länge verlegen lässt. Die Verlegung des Rohrs ist insbesondere dann schwierig und aufwendig, wenn das Rohr unterhalb des Grundwasserspiegels zu verlegen ist.

Aus KR 20100104822A ist ein Erdbauverfahren zur Installation eines Drainagerohrs bekannt. Um den Eintritt von Erde in ein Montagerohr zu verhindern und gleichzeitig den hydrostatischen Druck innerhalb des Montagerohrs aufrecht zu erhalten, wird zeitweise an einem Ende des Montagerohrs eine Vorrichtung vorgesehen, welche einen Eintritt von Erde verhindert, jedoch einen Durchtritt von Wasser ermöglicht. Aus DE 10 2007 002 399 A1 ist ein Verfahren zur Herstellung einer sich von einem Brunnenschacht erstreckenden verrohrten Strangbohrung für den Einbau eines Filterstrangs bekannt. Hierzu wird ein Bohrmotor, welcher ein aus einem Anfängerbohrrohr herausragendes Bohrwerkzeug antreibt, mittels einer lösbaren Spannvorrichtung in dem Anfängerbohrrohr gehalten. Über eine hydraulische Vortriebseinrichtung wird das Anfängerbohrrohr in den Boden gedrückt und es werden sukzessive weitere Bohrrohre angefügt, bis die gewünschte Länge der Strangbohrung erreicht ist. Anschließend wird das Sackloch zumindest an der Stirnseite seines geschlossenen Endes gegen Eintritt von Flüssigkeit aus dem Erdboden verschlossen.

Der Erfindung liegt die Aufgabe zugrunde, die Verlegung des Rohrs unterhalb des Grundwasserspiegels zu vereinfachen.

Erfindungsgemäß wird diese Aufgabe dadurch gelöst, dass die Bohreinrichtung einen Imlochhammer umfasst, welcher von einer in dem Schacht angeordneten Betriebseinrichtung über eine Kraftübertragungseinrichtung in Form einer Welle angetrieben wird.

Die erfindungsgemäße Bildung eines Verschlusses am Socklochende bringt bei Verlegung des Rohrs im Sackloch, insbesondere, wenn es unterhalb des Grundwasserspiegels zu verlegen ist, erhebliche Vorteile.

Diese Vorteile zeigen sich insbesondere, wenn das Rohr, das eine geschlossene Rohrwand aufweist, in dem gebildeten Sackloch angeordnet ist. Durch Verschließen des Sacklochs an dem geschlossenen Ende wird erreicht, dass keine Flüssigkeit mehr aus dem Erdboden in das Rohr eindringen kann. Bei der Bohrung des Sackloches angefallenes Bohrmaterial kann aus dem Rohr heraus transportiert werden und dadurch der Innenraum des Rohrs von dem Bohrmaterial befreit werden.

In einer besonders bevorzugten Ausführungsform der Erfindung wird das Rohr bereits während der Bildung des Sacklochs in dem Sackloch angeordnet, um zu vermeiden, dass das Sackloch instabil wird. Zweckmäßigerweise wird das Rohr, vorzugsweise direkt, hinter einem Bohrkopf der Bohreinrichtung in das Sackloch bewegt.

Die genannte Bohreinrichtung ist zweckmäßigerweise ausgebildet derart, dass sie sich nach Durchführung der Bohrung durch das Rohr hindurch aus dem Sackloch hinausbewegen lässt. Der Bohrkopf ist in einer Ausführungsform der Erfindung mit einem lösbaren Kopfteil versehen, der dazu vorgesehen ist, nach Ausbildung des Sackloches von dem übrigen Bohrkopf getrennt zu werden. Er verbleibt dann im Erdboden. Zweckmäßigerweise ist der Kopfteil derart geformt, dass durch ihn der äußere Umfangsbereich des Sacklochs, in dem das Rohr in dem Sackloch anzuordnen ist, gebildet werden kann. Er weist bevorzugt eine hohlzylindrische Form auf.

Ein nach Lösen des Kernteils verbleibender Kernteil des Bohrkopfs weist nach Lösen des Kopfteils vorzugsweise eine derartige Form auf, dass er sich durch das Rohr hindurch bewegen lässt.

Zweckmäßigerweise ist die Bohreinrichtung dazu geeignet, im Erdboden angeordneten Fels oder Gestein, der bzw. das eine Festigkeit größer als 150 MPa, vorzugsweise größer als 200 MPa, aufweist, zu durchbohren. Erfindungsgemäß umfasst die Bohreinrichtung einen Imlochhammer, der vorzugsweise pneumatisch oder hydraulisch betrieben wird. Der Imlochhammer, der den genannten Bohrkopf bildet, ist an einer Kraftübertragungseinrichtung, die durch eine Welle, insbesondere Hohlwelle, gebildet ist, angeordnet. Die Druckluft bzw. die Hydraulikflüssigkeit wird vorzugsweise durch die Hohlwelle geführt, insbesondere bei einem Druck von bis zu 25 bar (2,5 MPa), und steht direkt mit dem Imlochhammer in Verbindung.

Es versteht sich, dass auch der Imlochhammer den Kernteil und den vom Kernteil lösbaren Kopfteil aufweist, sodass sich der Kernteil des Imlochhammers nach Lösen des Kopfteils durch das Rohr hindurch wieder aus dem Sackloch hinausbewegen lässt.

Zweckmäßigerweise sind an der Stirnseite des Imlochhammers, vorzugsweise am Kernteil und/oder am Kopfteil, vorstehende Zapfen gebildet, um hartes Gestein wie Granit zu zerschlagen. Vorteilhaft eignet sich die Bohreinrichtung dann besonders gut zur Bearbeitung von Erdboden, in dem Fels angeordnet ist oder der durch Fels gebildet ist.

In einer Ausführungsform der Erfindung weist der Kernteil und/oder der Kopfteil zumindest einen Kanal auf, durch den hindurch Bohrmaterial, das mittels des Imlochhammers vom Erdboden gelöst worden ist, am Kernteil bzw. am Kopfteil vorbeibewegt werden kann, wenn der Imlochhammer in den Erdboden getrieben wird. Das Erdbodenmaterial gelangt dann im Zuge des Eintreibens der Bohreinrichtung in den Bereich des Sacklochs, der in Eintriebsrichtung hinter dem Bohrkopf liegt.

In einer weiteren Ausgestaltung der Erfindung wird das Bohrmaterial mittels einer Fördereinrichtung, die vorzugsweise einen Schneckenförderer umfasst, aus dem Sackloch bewegt. Dies erweist sich insbesondere dann als vorteilhaft, wenn das Rohr bereits während der Bildung des Sacklochs in dem Sackloch angeordnet ist, da das Rohr dann einen Rohrtrog der Förderschnecke bilden kann.

Zweckmäßigerweise ist ein Schneckengewinde des Schneckenförderers an der Kraftübertragungseinrichtung angeordnet. Dies erweist sich insbesondere dann als vorteilhaft, wenn die Kraftübertragungseinrichtung durch die genannte Welle gebildet ist, da diese dann zugleich eine Schneckenwelle des Schneckenförderers bilden kann.

In einer Ausführungsform der Erfindung wird zum Schließen des Sacklochendes ein Verschlussmaterial in den Erdboden eingebracht, vorzugsweise eingepresst. Dadurch wird am Rohrende ein Verschluss gebildet, der den Eintritt der Feststoffe und/oder der Flüssigkeit verhindert. Zweckmäßigerweise ist das Verschlussmaterial ein Kunststoff, vorzugsweise Polyurethan, der besonders bevorzugt derartige Eigenschaften hat, dass sich bei Kontakt mit Wasser seine Verfestigung beschleunigt.

In einer Ausgestaltung der Erfindung wird das Verschlussmaterial im flüssigen Zustand zu dem Sacklochende hin bewegt und verfestigt sich unter Ausbildung des Verschlusses an und/oder in dem Erdboden. Dazu wird es vorzugsweise durch das Rohr hindurch zu dem Sacklochende bewegt.

In einer besonders bevorzugten Ausführungsform der Erfindung wird das Verschlussmaterial durch eine Leitung zu dem Sacklochende transportiert. Die Leitung ist zweckmäßigerweise an der Bohreinrichtung und/oder der Fördereinrichtung befestigt und reicht vorzugsweise bis in den Bohrkopf, vorzugsweise durch den Bohrkopf hindurch. Als besonders vorteilhaft hat es sich erwiesen, die Leitung an dem Schneckenförderer anzuordnen, vorzugsweise zumindest abschnittsweise oder vollständig an der genannten Welle.

Zweckmäßigerweise ist die Leitung dazu eingerichtet, mit Druck von mindestens 120 bar (12 MPa), vorzugsweise mindestens 140 bar (14 MPa), beaufschlagt zu werden.

Die Leitung kann auch dazu benutzt werden, eine Spülflüssigkeit wie Wasser oder Bentonit zum Bohrkopf zu leiten, um dort den Bohrvorgang zu unterstützen. Dies ist insbesondere dann vor Vorteil, wenn durch vergleichsweise weiche Erdbodenabschnitte gebohrt werden muss, die z.B. kein Fels oder Gestein aufweisen.

In einer weiteren Ausgestaltung der Erfindung werden die Bohreinrichtung und/oder die Fördereinrichtung aus dem Sackloch heraus bewegt, nachdem der Verschluss gebildet worden ist und ggf. das Bohrmaterial aus dem Sackloch gefördert worden ist.

Alternativ zu den oben beschriebenen Verfahrensschritten, bei denen das Verschlussmaterial durch eine an der Bohreinrichtung und/oder der Fördereinrichtung befestigte Leitung zu dem Sacklochende transportiert wird, können die Bohreinrichtung und die Fördereinrichtung nach Fertigstellung der Bohrung und Förderung des Bohrmaterials auch aus dem Rohr entnommen werden, bevor der Verschluss gebildet ist. Bei dieser Variante, bei der das Rohr und ggf. auch der Schacht mit Grundwasser geflutet werden muss, wird nach Entnahme der Bohreinrichtung und der Fördereinrichtung eine gesonderte Einrichtung zur Leitung des Verschlussmaterials zum Sacklochende in dem Rohr angeordnet. Diese Leitungseinrichtung weist an ihrem dem Sackloch zugewandten Ende, das zuerst in das Rohr eingesetzt wird, zweckmäßigerweise einen den Rohrquerschnitt vollständig ausfüllenden Schieber auf, der vorzugsweise dichtend mit der Rohrinnenwand abschließt. Die Leitung ist zweckmäßigerweise durch eine Hohlwelle gebildet, an deren Ende sich der Schieber befestigen lässt. Auch die Hohlwelle der Leitungseinrichtung ist vorzugsweise durch mehrere, lösbar miteinander verbindbare Hohlwellensegmente aufbaubar.

Mittels des Schieber lässt sich Bohrmaterial, das im Rohr verblieben ist oder nach Entnahme der Bohreinrichtung und/oder der Fördereinrichtung in das Rohr eingetreten ist, wieder aus dem Rohr herausschieben, wenn die Leitungseinrichtung mit dem Stopfen bis zum Ende des Rohrs in das Rohr eingeschoben wird. Sobald das eine Ende der Leitungseinrichtung bis zum Ende des Rohrs 1 bewegt worden ist, wird das Verschlussmaterial durch eine Leitung der Leitungseinrichtung hindurch in den Erdboden am Ende der Sacklochbohrung eingebracht, um den Verschluss zu bilden. Nach Aushärtung des Verschlussmaterials und der Bildung des Verschlusses dadurch, wird die Leitungseinrichtung wieder aus dem Rohr entnommen, sodass wie oben für die erste Variante beschrieben im Erdboden ein vollständig geschlossenes Rohr angeordnet ist.

In einer Ausgestaltung der Erfindung wird nach Entnahme der Bohreinrichtung und/oder der Fördereinrichtung innerhalb des Rohrs ein Drainagerohr angeordnet.

Zweckmäßigerweise wird anschließend das zuerst angeordnete Rohr wieder aus dem Sackloch rausbewegt, sodass lediglich das Drainagerohr in dem Sackloch verbleibt. Vorzugsweise ist am Ende des zuerst angeordneten Rohrs eine Dichtung angeordnet, die den Zwischenraum zwischen dem Rohr und dem Drainagerohr abdichtet, um zu vermeiden, dass bei Entnahme des Rohrs Feststoffe in den Zwischenraum gelangen.

Erfindungsgemäß wird das Sackloch von einem unterirdischen Hohlraum, vorzugsweise einem Schacht oder einer Baugrube, aus gebildet. Das Sackloch wird bevorzugt im Wesentlichen horizontal im Erdboden angeordnet.

Es versteht sich, dass das Erdbauverfahren die Bildung des Hohlraums umfassen kann. Eine Wand des Hohlraums ist vorzugsweise aus Stahlbeton gebildet, besonders bevorzugt durch vertikal angeordnete Pfähle.

Zweckmäßigerweise wird bei Bildung des Sacklochs ausgehend von dem Hohlraum zunächst in einer Wand des Hohlraums eine Bohrung gebildet und durch die Bohrung hindurch in einen Bereich des Erdbodens, der die Hohlraumwand im Bereich der zu bildenden Sacklochbohrung umgibt, Material zum Verfestigen des Erdbodens eingebracht. Vorzugsweise wird das Verfestigungsmaterial in dem Bereich in den Erdboden eingepresst. Nach Verfestigung wird das Sackloch durch den verfestigten Bereich hindurch gebohrt.

In einer Ausführungsform der Erfindung sind die Bohreinrichtung, die Fördereinrichtung und/oder das Rohr jeweilig aus mehreren lösbar miteinander verbindbaren Bohreinrichtungssegmenten, Fördereinrichtungssegmenten bzw. Rohrsegmenten gebildet. Vorteilhaft lässt sich dann auch aus einem verhältnismäßig kleinen oder engen Hohlraum heraus ein Sackloch schaffen und darin ein Rohr verlegen, das im Vergleich zu der Größe des Hohlraums wesentlich länger ist. Es versteht sich, dass bei Durchführung des Erdbauverfahrens die jeweiligen Segmente nach und nach miteinander verbunden werden, wenn die Bohreinrichtung, die Fördereinrichtung bzw. das Rohr aufgebaut werden, und wieder voneinander getrennt werden, wenn die Bohreinrichtung, die Fördereinrichtung oder das Rohr aus dem Sackloch herausbewegt wird.

In einer Ausführungsform der Erfindung sind die Segmente, insbesondere jeweilig auch die Hohlwelle und die genannte Leitung aneinandersteckbar und, ggf. mittels einer Raste, aneinander fixierbar. Sie sind dazu zweckmäßigerweise mit Muffen versehen.

Zweckmäßigerweise weist das Drainagerohr in einem Abschnitt, in dem es durch die Hohlraumwand geführt ist, wenn es in seiner Endposition in dem Sackloch angeordnet ist, eine geschlossene Rohrwand auf. Vorteilhaft lässt sich durch Verschließen des Drainagerohrs im Bereich der geschlossenen Rohrwand, beispielsweise mittels eines Stopfens, vermeiden, dass Flüssigkeit durch das Drainagerohr hindurch in den Hohlraum gelangt, wenn das zuerst angeordnete Rohr aus dem Sackloch bewegt wird. Es versteht sich, dass nach vollständiger Entnahme des zuerst angeordneten Rohrs auch der Raum zwischen der geschlossenen Rohrwand des Drainagerohrs und der Hohlraumwand abgedichtet werden kann, um einen Eintritt von Flüssigkeit und/oder Feststoff durch diesen Raum in den Hohlraum zu vermeiden.

Die genannte Erdbauvorrichtung umfasst eine Betriebseinrichtung, mittels derer sich die Bohreinrichtung und/oder die Fördereinrichtung betreiben, das flüssige Verschlussmaterial durch die Leitung zum dem Sacklochende bewegen und/oder das Rohr in das Sackloch bewegen, im Sackloch halten und ggf. dem Sackloch wieder entnehmen lässt.

Die Betriebseinrichtung ist zur Anordnung in dem genannten Hohlraum vorgesehen und vorzugsweise zur Abstützung an der Hohlraumwand eingerichtet.

Die Betriebseinrichtung ist dazu eingerichtet, die Bohreinrichtung in den Erdboden hineinzutreiben, indem die Bohreinrichtung in den Erdboden, ggf. unter Rotation, mittels der Kraftübertragungseinrichtung in den Erdboden gedrückt wird.

Zum Betreiben des Imlochhammers ist die Betriebseinrichtung vorzugsweise dazu vorgesehen, den Imlochhammer mit Druckluft- und/oder Hydraulikflüssigkeit zu versorgen.

In einer Ausführungsform der Erfindung umfasst die Betriebseinrichtung eine Pumpe zum Fördern des flüssigen Verschlussmaterials durch die Leitung.

Zum Betreiben der Fördereinrichtung ist die Betriebseinrichtung zweckmäßigerweise dazu eingerichtet, den Schneckenförderer in Rotation zu versetzen.

Zum Handhaben des Rohrs umfasst die Betriebseinrichtung vorzugsweise eine Einrichtung zum Schieben des Rohrs, insbesondere des zuerst angeordneten oder/und des weiteren Rohrs, in das Sackloch, Halten des Rohrs in dem Sackloch und/oder Ziehen des Rohrs aus dem Sackloch. Es versteht sich, dass die Betriebseinrichtung dazu eingerichtet ist, das Rohr und das weitere Rohr, insbesondere das Drainagerohr, gleichzeitig zu handhaben, wobei sie die beiden Rohre vorzugsweise unabhängig voneinander schieben, halten und/oder ziehen kann. Beispielsweise kann mittels der Betriebseinrichtung das weitere Rohr in dem Sackloch gehalten und gleichzeitig das zuerst in dem Sackloch angeordnete Rohr aus dem Sackloch gezogen werden.

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1 bis 9: schematisch Verfahrensschritte des erfindungsgemäßen Erdbauverfahrens, und
- Fig. 10 bis 12: Teile der erfindungsgemäßen Erdbauvorrichtung.

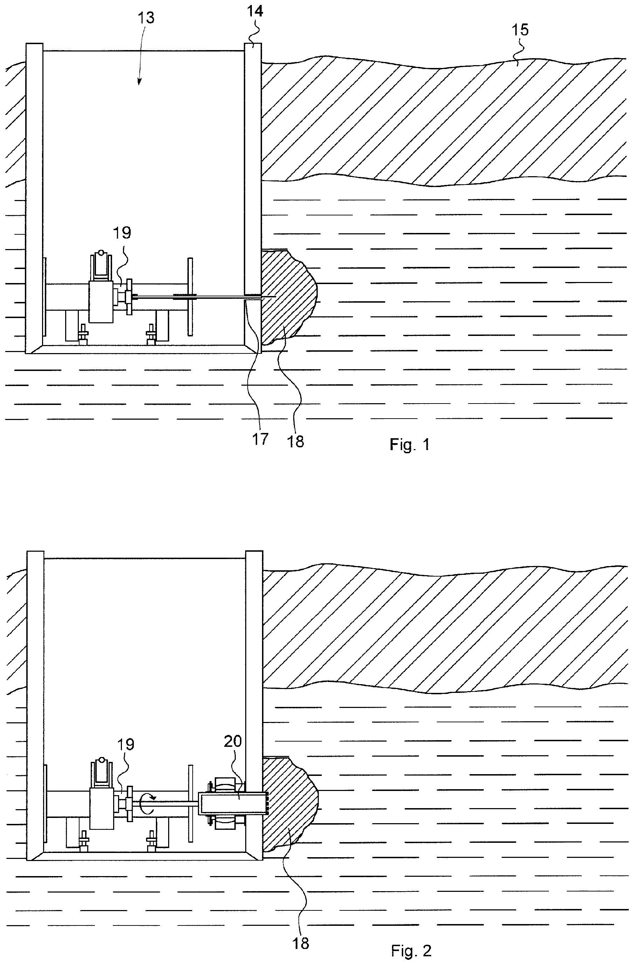

In Fig. 1 ist im Schnitt ein unmittelbar unterhalb der Erdoberfläche angeordneter Erdbodenbereich 15 dargestellt, in dem der Grundwasserpegel mit dem Bezugszeichen 16 dargestellt ist. In dem Erdbodenbereich 15 ist ein Schacht 13 eingebracht worden, der eine Schachtwand 14 aufweist. Ziel des in diesem Ausführungsbeispiel beschriebenen Erdbauverfahrens ist, unterhalb des Grundwasserpegels 16 ein Drainagerohr 8 im Erdboden einzubringen.

Dazu wird zunächst in dem Schacht 13 eine Betriebseinrichtung 19 angeordnet, die sich mit einem Bohrer bestücken lässt und in die Schachtwand 14 eine erste Bohrung 17 eingebracht und durch die Bohrung 17 hindurch ein Material 18 zum Verfestigen des Erdbodens nahe der Schachtwand 14 in den Erdboden eingepresst. Das Verfestigungsmaterial kann beispielsweise ein Polyurethan sein, das sich unter Einwirkung von Wasser verfestigt.

Wie Fig. 2 zu entnehmen ist, wird die Betriebseinrichtung 19 mit einem Kernbohrer 20 bestückt und die Schachtwand 14, die aus Stahlbeton gebildet sein kann, vollständig durchbohrt.

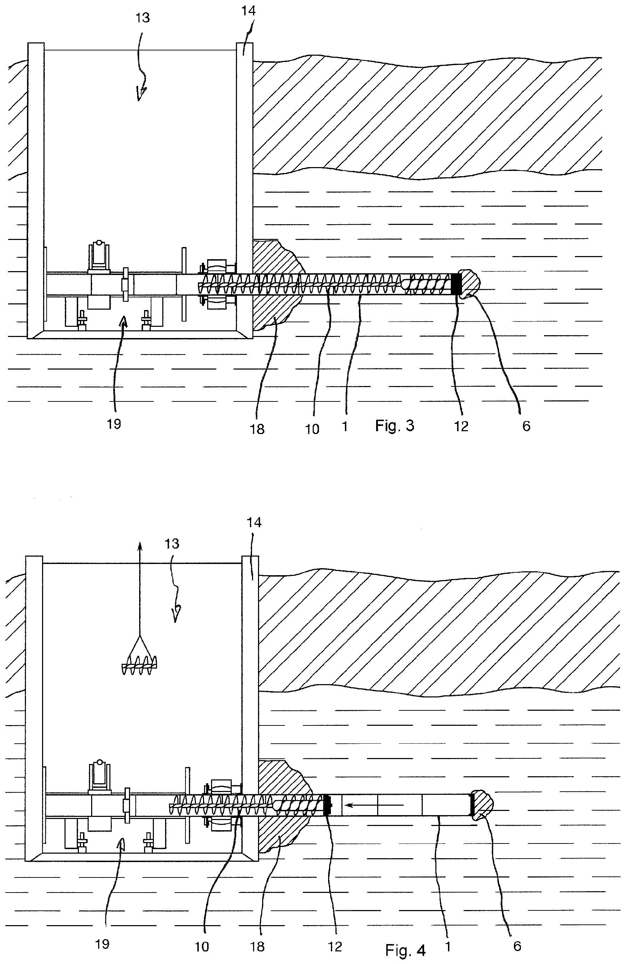

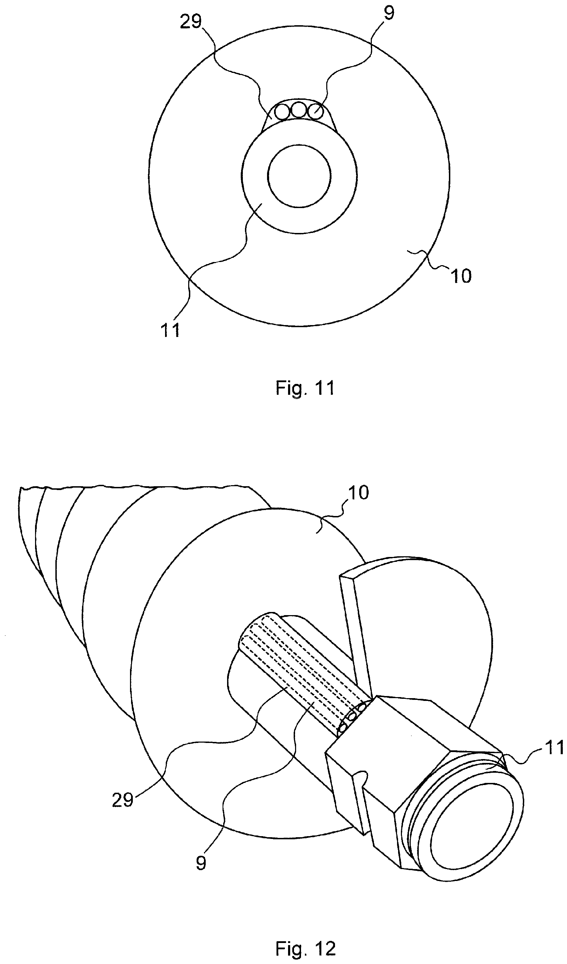

Danach wird der Kernbohrer 20 aus der Schachtwand 14 entnommen, von der Betriebseinrichtung 19 abgebaut und die Betriebseinrichtung 19 mit einer in Fig. 3 gezeigten Bohr- und Fördereinrichtung bestückt. Die Bohr- und Fördereinrichtung umfasst als Bohrkopf einen in Fig. 11 gezeigten Imlochhammer 12, eine Welle 11, an der der Imlochhammer 12 angeordnet ist und mittels derer durch die Betriebseinrichtung 19 auf den Imlochhammer 12 Kraft ausgeübt werden kann, um den Imlochhammer 12 in den Erdboden einzutreiben, aus dem Erdboden herauszubewegen oder rotieren zu lassen.

Wie Fig. 11 und 12 zu entnehmen ist, ist die Welle 11 eine Hohlwelle, in deren Innenraum Druckluft oder eine Hydraulikflüssigkeit zum Betreiben des Imlochhammers 12 angeordnet ist.

Auf der Außenseite der Welle 11 sind Schneckenwindungen eines Schneckenförderers 10 angeordnet. Ferner sind auf der Außenseite der Welle 11 Leitungen 9 gebildet, durch die hindurch sich Verfestigungsmaterial zum Imlochhammer 12 transportieren lässt. Die Leitungen 9 sind innerhalb einer Ummantelung 29 angeordnet, die auf der Welle 11 angeordnet ist. Dazu sind an den jeweiligen Enden der Welle 11 und der Leitungen 9 Muffen gebildet.

Die Bohr- und Fördereinrichtung, insbesondere auch die mit den Schneckenwindungen und den Leitungen 9 versehene Welle 11, ist aus mehreren, lösbar miteinander verbundenen Bohr- und Fördersegmenten gebildet, aus denen sich die Bohr- und Fördereinrichtung nach und nach aufbauen lässt, indem die Bohr- und Fördersegmente sukzessive miteinander verbunden werden. Die Leitungen 9 und die Welle 11 der einzelnen Segmente können miteinander verschraubbar oder ineinandersteckbar und ggf. mit einem Rastmechanismus aneinander fixierbar vorgesehen sein.

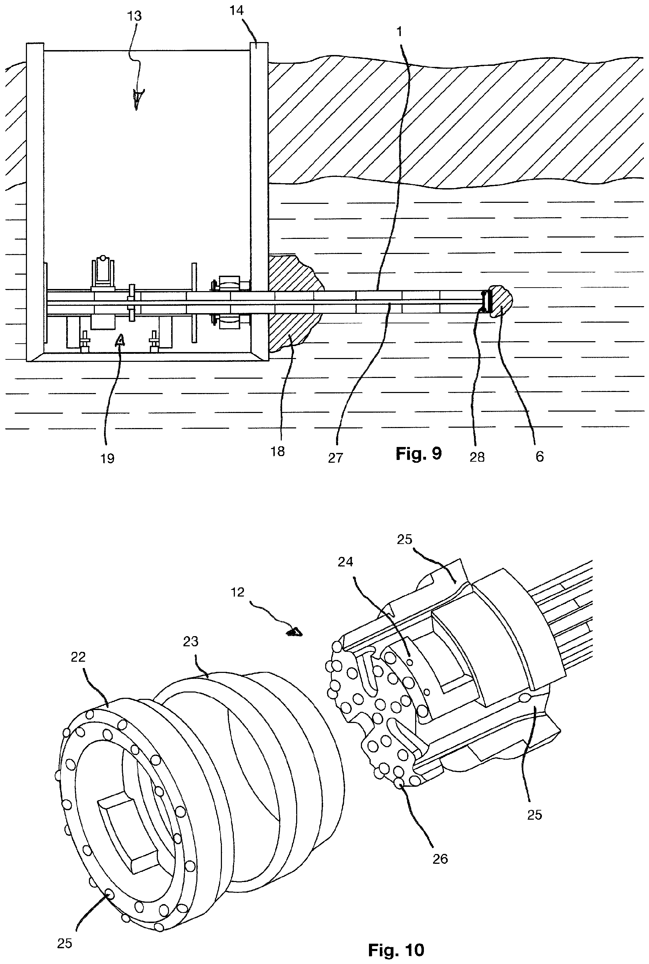

Wie Fig. 10 in einer Explosionsdarstellung zeigt, weist der Imlochhammer 12 einen hohlzylinderförmigen Kopfteil 22 und einen den Kopfteil 22 mit dem restlichen Imlochhammer 22 verbindenden, ebenfalls hohlzylindrischen Schalenteil 23 auf, die sich von einem Kernteil 24 des Imlochhammers lösen lassen. Sowohl der Kopfteil 22 als auch der Kernteil 24 sind mit Vorsprüngen 25,26 versehen, die unterstützend wirken, wenn mittels des Imlochhammers 12 Gestein oder Fels, das sich im Erdboden befindet, zertrümmert werden muss, um es durchdringen zu können. Der Kernteil 24, der Schalenteil 23 und der Kopfteil 22 sind so geformt, dass der Imlochhammer 11, wenn er vollständig zusammengesetzt ist, Kanäle 25 aufweist, durch die hindurch Bohrmaterial, das im Zuge der Bohrung im Erdboden gelöst wird, durch den Imlochhammer 12 hindurch bewegt werden kann.

Die Bohr- und Fördereinrichtung lässt sich durch Zusammensetzen mehrerer Segmente sukzessive aufbauen und immer weiter verlängern, um das Sackloch 3 aus dem Schacht 13 herausbilden zu können.

Bei Durchführung des erfindungsgemäßen Erdbauverfahrens wird zunächst ein erstes von mehreren Rohrsegmenten, aus denen sich ein Rohr 1 aufbauen lässt, welches in das Sackloch 3 einzubringen ist, in der Bohrung in der Schachtwand 14 angeordnet und ggf. mit weiteren Rohrsegmenten verbunden. Anschließend wird ein erstes Segment der Bohr- und Fördereinrichtung, welches den Imlochhammer 12 umfasst, in den Teil des Rohrs 1 eingeschoben, der bereits in der Öffnung in der Schachtwand 14 angeordnet ist. Danach werden sukzessive weitere Rohrsegmente an das Rohr bzw. weitere der Bohr- und Fördersegmente an die Bohr- und Fördereinrichtung angesetzt, bis die Bohr- und Fördereinrichtung mittels der Betriebseinrichtung 19 zur Bildung des Sacklochs 3 betrieben und das durch die Rohrsegmente gebildete Rohr 1 gemeinsam mit der Bohr- und Fördereinrichtung 2 in das Sackloch 3 eingetrieben werden kann. Um zu vermeiden, dass das gebohrte Sackloch in Bohrrichtung gesehen hinter dem Imlochhammer 12 instabil wird, wird das Rohr 1 ziemlich direkt hinter dem Imlochhammer 12 in das Sackloch 3 eingeschoben.

Die Bohr- und Fördereinrichtung und das Rohr 1 werden nun sukzessive immer weiter aufgebaut und immer weiter in den Erdboden 15 hineingetrieben, bis das Sackloch 3 in ausreichender Länge gebildet ist. Dabei mittels des Imlochhammers 12 auch Gestein oder Fels durchdrungen werden, das eine Festigkeit von bis zum 200 MPa aufweist.

In der Betriebseinrichtung 19 wird dann die genannte Leitung 9 mit einem hier nicht gezeigten Reservoir für das Verschlussmaterial verbunden und das Verschlussmaterial mittels einer hier nicht gezeigten Pumpeinrichtung durch die Leitungen 9 und den Imlochhammer 12 hindurch auf die Stirnseite 4 des Endes des Sacklochs 3 gefördert und dort in den Erdboden 15 gepresst, bis eine ausreichende Menge des Verschlussmaterials in den Erdboden 15 eingebracht worden ist, um das Ende 5 des Sacklochs so zu verschließen, dass es undurchlässig gegen Flüssigkeit und Feststoffe wird. Durch das Rohr 1 und einen durch das Verschlussmaterial gebildeten Verschluss 6 ist dann das Innere des Rohrs 1 vollständig gegen den Erdboden 5 abgedichtet.

Anschließend wird die Bohr- und Fördereinrichtung unter Drehung der Förderschnecke 10 betrieben, um in dem Rohr 1 verbleibendes Bohrmaterial aus dem Rohr 1 herauszutransportieren. Dabei dient das Rohr 1 als Rohrtrog des Schneckenförderers.

Nach Entfernung des Bohrmaterials aus dem Rohr 1 wird die Bohr- und Fördereinrichtung, wie Fig. 4 zeigt, nach und nach aus dem Sackloch 3 rausbewegt, wobei die genannten Bohr- und Fördersegmente nach und nach von der Bohr- und Fördereinrichtung abgebaut und ggf. aus dem Schacht herausgenommen werden. Beim Herausziehen des Imlochhammers 12 trennen sich der Kopfteil 22 und das Schalenteil 23 von dem Kernteil 24 ab und verbleiben am Ende 5 des Sacklochs 2 im Erdboden 25.

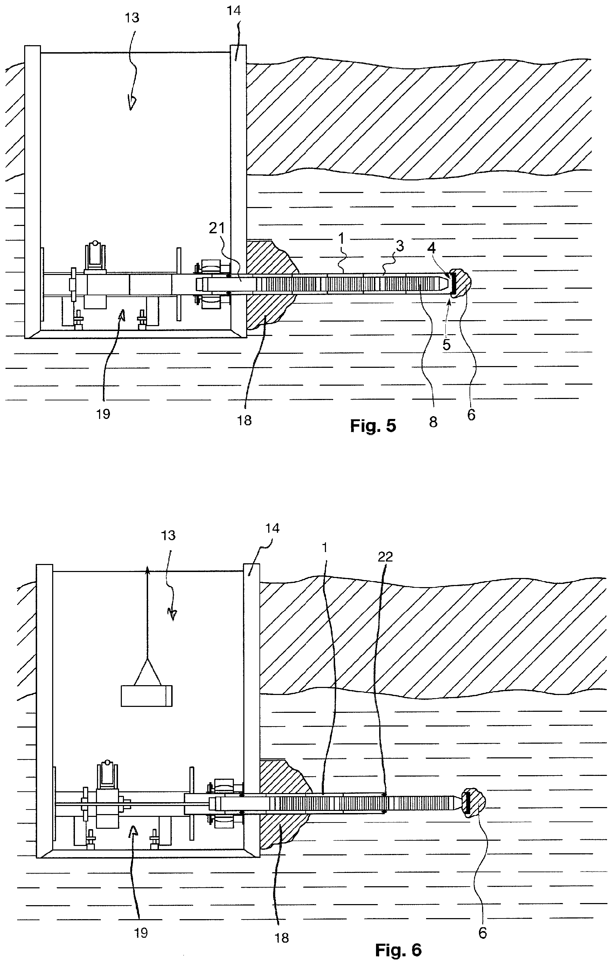

Nachdem die Bohr- und Fördereinrichtung vollständig aus dem Rohr 1 herausbewegt worden ist, wird ein Drainagerohr 8, das aus Drainagerohrsegmenten aufgebaut wird, nach und nach unter Verwendung der Betriebseinrichtung 19 in das Rohr 1 hineingeschoben, bis es zum Ende des Sacklochs 3 reicht. Für das zuletzt anzuordnende Drainagerohrsegment, das in der Bohrung in der Schachtwand 14 sitzt, wird, wie in Fig. 5 dargestellt, ein Rohrabschnitt 21 verwendet, dessen Rohrwand vollständig geschlossen ist.

Fig. 6 zeigt wie nach Anordnung des Drainagerohrs 8 in dem Rohr 1 wird das Rohr 1 nach und nach aus dem Sackloch 3 herausgezogen wird, wobei eine Dichtung 22, die zwischen dem Drainagerohr 8 und dem Rohr 1 auf der Innenseite des Rohrs 1 angeordnet ist, verhindert, dass Flüssigkeit oder Feststoffe in den Zwischenraum zwischen dem Drainagerohr 3 und dem Rohr 1 dringen können. Dadurch wird vermieden, dass das Drainagerohr 8 beim Herausbewegen des Rohrs 1 beschädigt wird. Um zu vermeiden, dass beim Herausziehen des Rohrs 1 durch das Drainagerohr 8 Wasser in den Schacht 13 gelangen kann, wird das Drainagerohr 8 an seinem dem Schacht 13 zugewandten Ende mit einem hier nicht gezeigten Stopfen verschlossen.

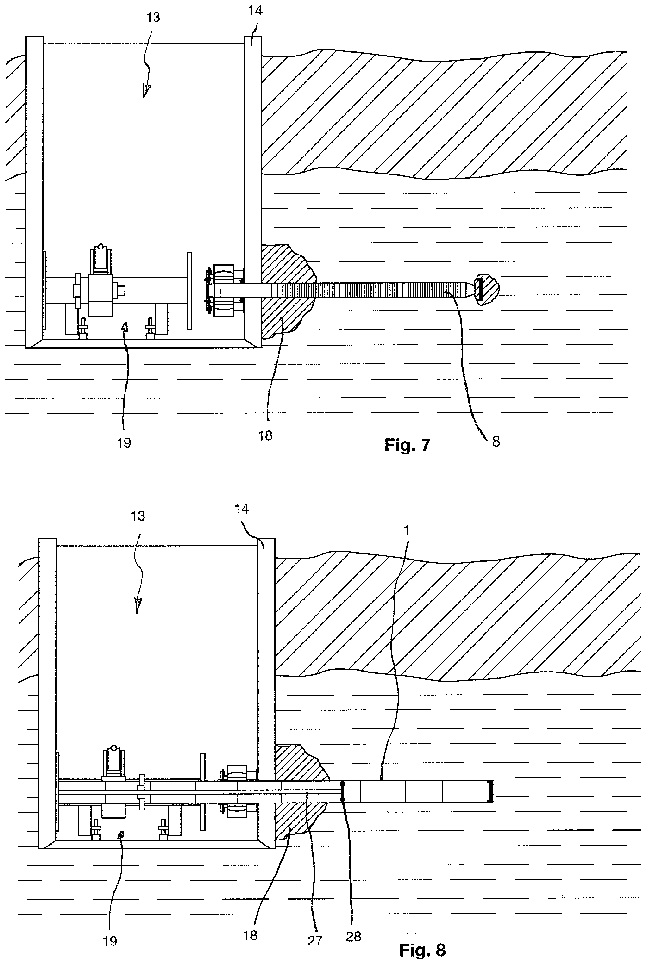

Nachdem das Rohr 1 vollständig aus dem Sackloch 3 herausbewegt worden ist, wird ferner der Ringspalt zwischen dem Drainagerohr 8 und der Wand der Bohrung in der Schachtwand 14 mit einem Dichtmaterial verschlossen. Das Drainagerohr 8 ist nun vollständig aufgebaut am Schacht 13 installiert (Fig. 7). Die Betriebseinrichtung 19 kann nun aus dem Schacht 13 herausgenommen und der Schacht 13 geflutet werden, indem der Stopfen aus dem letzten Segment des Drainagerohrs 8 herausgenommen wird, damit Wasser über das Drainagerohr 8 in den Schacht 13 gelangen kann.

Bei einer Variante des erfindungsgemäßen Erdbauverfahrens, bei dem es möglich ist, eine Bohreinrichtung und eine Fördereinrichtung zu verwenden, die nicht selbst dazu ausgestattet sind, das Verschlussmaterial zum Ende des Sacklochs zu transportieren, wird wie oben anhand der Figuren 1 - 3 erläutert, die Sacklochbohrung gebildet und ein Rohr 1 in dem Sackloch 3 angeordnet. Anschließend wird die Bohr- und Fördereinrichtung dem Rohr 1 entnommen, wobei das Ende 5 des Sacklochs 3 offenbleibt und ggf. Grundwasser in das Rohr 1 eintritt und den Schacht 13 flutet. Nach vollständiger Entnahme der Bohr- und Fördereinrichtung wird, wie in Fig. 8 gezeigt ist, in dem Rohr 1 eine Einrichtung 27 zur Leitung des Verschlussmaterials sowie zum Herausschieben von Feststoffen, die durch das Sacklochende in das Rohr 1 eingedrungen sind, aus dem Rohr 1 angeordnet. Dazu ist am Ende der Einrichtung 27 eine Schieberplatte 28 angeordnet, die den Rohrquerschnitt vollständig ausfüllt und mit einer Dichtung versehen ist, die an der Rohrinnenwand anliegt. Die Einrichtung 27 wird nun bis zum Ende des Sacklochs 3 bewegt und dabei die Feststoffe zum Sacklochende 5 hin geschoben und das Verpressmaterial am Sacklochende 5 in den Erdboden eingepresst. Nach Aushärten des Verpressmaterials bildet sich dort ein Verschluss 6. Nachdem die Einrichtung 27 aus dem Rohr 1 entnommen worden ist, werden die oben anhand der Figuren 5 und 6 beschriebenen Verfahrensschritte durchgeführt und die Drainagerohrleitung fertiggestellt.

## Patentansprüche

1. Erdbauverfahren, bei dem mittels einer Bohreinrichtung (2) ausgehend von einem unterirdischen Hohlraum (13) im Erdboden ein Sackloch (3) gebildet und in dem Sackloch (3) ein Rohr (1) mit geschlossener Wandung und in dem Rohr (1) ein Drainagerohr (8) angeordnet wird,
wobei
das Sackloch (3) zumindest an der Stirnseite (4) seines geschlossenen Endes (5) gegen Eintritt von Flüssigkeit aus dem Erdboden verschlossen wird,
**dadurch gekennzeichnet,**
**dass** die Bohreinrichtung (2) einen Imlochhammer (12) umfasst, welcher von einer in dem Hohlraum (13) angeordneten Betriebseinrichtung (19) über eine Kraftübertragungseinrichtung in Form einer Welle (11) angetrieben wird.

2. Erdbauverfahren nach Anspruch 1,
**dadurch gekennzeichnet,**
**dass** zum Verschließen des Sacklochendes (5) ein Verschlussmaterial (6) in den Erdboden eingebracht, vorzugsweise eingepresst, wird.

3. Erdbauverfahren nach Anspruch 2,
**dadurch gekennzeichnet,**
**dass** das Verschlussmaterial (6) im flüssigen Zustand, vorzugsweise innerhalb des Rohrs (1), zu dem Sacklochende (5) bewegt wird und sich unter Ausbildung einer verschließenden Wirkung an oder/und in dem Erdboden verfestigt.

4. Erdbauverfahren nach einem der Ansprüche 2 oder 3,
**dadurch gekennzeichnet,**
**dass** das Verschlussmaterial (6) ein Kunststoff, vorzugsweise Polyurethan, ist.

5. Erdbauverfahren nach einem der Ansprüche 1 bis 4,
**dadurch gekennzeichnet,**
**dass** ein Bohrwerkzeug nach Fertigstellung des Sacklochs (3) unter Bewegung durch das Rohr (1) aus dem Sackloch (3) heraus bewegt wird.

6. Erdbauverfahren nach einem der vorhergehenden Ansprüche,
**dadurch gekennzeichnet,**
**dass** das Rohr (1)nach Anordnung des Drainagerohrs (8) aus dem Sackloch (3) heraus bewegt wird.

7. Erdbauverfahren nach Anspruch 2,
**dadurch gekennzeichnet,**
**dass** das Verschlussmaterial innerhalb des Rohrs (1) durch eine Leitung (9) zu dem genannten geschlossenen Ende (5) des Sacklochs (3) bewegt wird.

8. Erdbauverfahren nach einem der Ansprüche 1 bis 7,
**dadurch gekennzeichnet,**
**dass** das Erdbauverfahren von einem Schacht oder einer Baugrube aus durchgeführt wird und das Sackloch (3) vorzugsweise im Wesentlichen horizontal im Erdboden angeordnet wird.

9. Erdbauvorrichtung, die eine Bohreinrichtung (2), mittels derer sich ausgehend von einem unterirdischen Hohlraum (13) im Erdboden ein Sackloch (3) bilden lässt, das zur Aufnahme eines Drainagerohrs (8) vorgesehen ist, und eine Betriebseinrichtung zum Einschieben eines Rohrs (1) mit geschlossener Wandung und des Drainagerohrs (8) in das Sackloch (3) sowie eine Einrichtung (9) zur Bildung eines Verschlusses zumindest an der Stirnseite (4) eines geschlossenen Endes (5) des Sackloches (3) gegen Eintritt von Flüssigkeit aus dem Erdboden umfasst,
**dadurch gekennzeichnet,**
**dass** die Bohreinrichtung einen Imlochhammer (12) umfasst, welcher mit einer in dem Hohlraum (13) angeordneten Betriebseinrichtung (19) über eine Kraftübertragungseinrichtung in Form einer Welle (11) verbunden ist.

10. Erdbauvorrichtung nach Anspruch 9,
**gekennzeichnet durch** eine Fördereinrichtung, mittels derer sich Bohrmaterial,
das beim Bohren vom Erdboden gelöst wird, aus dem Sackloch (3) bewegen lässt, wobei die Fördereinrichtung vorzugsweise einen Schneckenförderer (10) umfasst.

11. Erdbauvorrichtung nach Anspruch 10,
**dadurch gekennzeichnet,**
**dass** ein Schneckengewinde des Schneckenförderers (10) an der Welle (11) zur Übertragung von Kraft auf einen Bohrkopf (12) angeordnet ist.

12. Erdbauvorrichtung nach einem der Ansprüche 9 bis 11,
**dadurch gekennzeichnet,**
**dass** die Verschlussbildungseinrichtung (9) eine Leitung umfasst, die bis in den Bohrkopf (12), vorzugsweise durch den Bohrkopf (12) hindurch, reicht.

13. Erdbauvorrichtung nach Anspruch 12,
**dadurch gekennzeichnet,**
**dass** die Leitung am Schneckenförderer (10), vorzugsweise zumindest abschnittsweise an der Welle anliegend, angeordnet ist.

## Claims

1. Earthwork method in which, starting from an underground cavity (13) in the ground, a blind hole (3) is formed by means of a boring device (2) and a pipe (1) with a closed wall is arranged in the blind hole (3) and a drainage pipe (8) is arranged in the pipe (1),
wherein
at least at the front face (4) of its closed end (5), the blind hole (3) is closed against the ingress of liquid from the ground,
**characterized in that**
the boring device (2) comprises a down-the-hole hammer (12), which is driven by an operating device (19) arranged in the cavity (13) via a power transmission device in the form of a shaft (11).

2. Earthwork method according to Claim 1,
**characterized in that**
in order to close the end (5) of the blind hole, a closure material (6) is introduced into the ground, preferably pressed in.

3. Earthwork method according to Claim 2,
**characterized in that**
the closure material (6) is moved to the end (5) of the blind hole in the liquid state, preferably inside the pipe (1), and solidifies, forming a closing effect on and/or in the ground.

4. Earthwork method according to either of Claims 2 and 3,
**characterized in that**
the closure material (6) is a plastic, preferably polyurethane.

5. Earthwork method according to one of Claims 1 to 4,
**characterized in that**
after the blind hole (3) has been completed, a boring tool is moved out of the blind hole (3), moving through the pipe (1).

6. Earthwork method according to one of the preceding claims,
**characterized in that**
after the drainage pipe (8) has been arranged, the pipe (1) is moved out of the blind whole (3).

7. Earthwork method according to Claim 2,
**characterized in that**
the closure material is moved to the aforementioned closed end (5) of the blind hole (3) through a conduit (9) inside the pipe (1).

8. Earthwork method according to one of Claims 1 to 7,
**characterized in that**
the earthwork method is carried out from a shaft or an excavation, and the blind hole (3) is preferably arranged substantially horizontally in the ground.

9. Earthwork device, which comprises a boring device (2) by means of which, starting from an underground cavity (13) in the ground, it is possible to form a blind hole (3), which is provided to accommodate a drainage pipe (8), and an operating device for inserting a pipe (1) with a closed wall and the drainage pipe (8) into the blind hole (3), and also a device (9) for forming a closure, at least at the end face (4) of a closed end (5) of the blind hole (3), against the ingress of liquid out of the ground,
**characterized in that**
the boring device comprises a down-the-hole hammer (12), which is connected to an operating device (19) arranged in the cavity (13) via a power transmission device in the form of a shaft (11).

10. Earthwork device according to Claim 9, **characterized by** a conveying device, by means of which boring material which is loosened from the ground during boring can be moved out of the blind hole (3), wherein the conveying device preferably comprises a screw conveyor (10).

11. Earthwork device according to Claim 10,
**characterized in that**
a screw thread of the screw conveyor (10) is arranged on the shaft (11) for transmitting power to a boring head (12) .

12. Earthwork device according to one of Claims 9 to 11,
**characterized in that**
the closure-forming device (9) comprises a conduit which reaches as far as the boring head (12), preferably through the boring head (12).

13. Earthwork device according to Claim 12,
**characterized in that**
the conduit is arranged on the screw conveyor (10), preferably resting on the shaft, at least in some sections.

## Revendications

1. Procédé de terrassement lors duquel un trou borgne (3), partant d'un espace creux souterrain (13), est formé dans le sol au moyen d'un dispositif de forage (2) et un tuyau (1) présentant une paroi fermée est agencé dans le trou borgne (3) et un tuyau de drainage (8) est agencé dans le tuyau (1),
le trou borgne (3) étant obturé au moins au niveau de la face frontale (4) de son extrémité obturée (5) contre l'entrée de liquide provenant du sol, **caractérisé en ce que** le dispositif de forage (2) comprend un marteau fond de trou (12) qui est entraîné par un dispositif d'entraînement (19) agencé dans l'espace creux (13) par l'intermédiaire d'un dispositif de transmission de force sous forme d'un arbre (11).

2. Procédé de terrassement selon la revendication 1, **caractérisé en ce qu'**un matériau d'obturation (6) est introduit, de préférence injectée, dans le sol pour l'obturation de l'extrémité (5) du trou borgne.

3. Procédé de terrassement selon la revendication 2, **caractérisé en ce que** le matériau d'obturation (6) est déplacé à l'état liquide, de préférence à l'intérieur du tuyau (1), vers l'extrémité (5) du trou borgne et se solidifie en réalisant un effet d'obturation au niveau du ou/et dans le sol.

4. Procédé de terrassement selon l'une quelconque des revendications 2 ou 3, **caractérisé en ce que** le matériau d'obturation (6) est un matériau synthétique, de préférence le polyuréthane.

5. Procédé de terrassement selon l'une quelconque des revendications 1 à 4, **caractérisé en ce qu'**après la réalisation du trou borgne (3), un outil de forage est déplacé hors du trou borgne (3) par déplacement à travers le tuyau (1).

6. Procédé de terrassement selon l'une quelconque des revendications précédentes, **caractérisé en ce qu'**après l'agencement du tuyau de drainage (8), le tuyau (1) est déplacé hors du trou borgne (3).

7. Procédé de terrassement selon la revendication 2, **caractérisé en ce que** le matériau d'obturation est déplacé à l'intérieur du tuyau (1) à travers une conduite (9) vers ladite extrémité obturée (5) du trou borgne (3).

8. Procédé de terrassement selon l'une quelconque des revendications 1 à 7, **caractérisé en ce que** le procédé de terrassement est mis en oeuvre à partir d'un puits ou d'une excavation et le trou borgne (3) est agencé de préférence de manière sensiblement horizontale dans le sol.

9. Dispositif de terrassement, qui comprend un dispositif de forage (2), qui, partant d'un espace creux souterrain (13), permet de former un trou borgne (3) dans le sol, lequel trou borne (3) est destiné à recevoir un tuyau de drainage (8), et un dispositif d'entraînement destiné à glisser un tuyau (1) présentant une paroi fermée et le tuyau de drainage (8) dans le trou borgne (3) ainsi qu'un dispositif (9) destiné à former une obturation au moins au niveau de la face frontale (4) d'une extrémité obturée (5) du trou borgne (3) contre l'entrée de liquide provenant du sol, **caractérisé en ce que** le dispositif de forage (2) comprend un marteau fond de trou (12) qui est relié à un dispositif d'entraînement (19) agencé dans l'espace creux (13) par l'intermédiaire d'un dispositif de transmission de force sous forme d'un arbre (11).

10. Dispositif de terrassement selon la revendication 9, **caractérisé par** un dispositif de transport au moyen duquel du matériau de forage qui est détaché lors du forage du sol peut être déplacé hors du trou borgne (3), le dispositif de transport comprenant de préférence un transporteur à vis (10).

11. Dispositif de terrassement selon la revendication 10, **caractérisé en ce que** le transporteur à vis (10) présente, au niveau de l'arbre (11), un filetage destiné à la transmission de force à une tête de forage (12).

12. Dispositif de terrassement selon l'une quelconque des revendications 9 à 11, **caractérisé en ce que** le dispositif (9) de formation d'obturation comprend une conduite qui s'étend jusque dans la tête de forage (12), de préférence à travers la tête de forage (12).

13. Dispositif de terrassement selon la revendication 12, **caractérisé en ce que** la conduite est agencée au niveau du transporteur à vis (10) tout en se plaçant de préférence au moins par endroits contre l'arbre.
